# EUROPEAN PATENT APPLICATION

(11) **EP 1 750 068 A1**
(43) Date of publication of application: **07.02.2007**
(21) Application number: 05024320.3
(22) Date of filing: 08.11.2005
(51) Int. Cl.: F24F 11/00

(54) **Ventilation apparatus and control method thereof**

(30) Priority: 06.08.2005 KR 2005072032
(71) Applicant: Samsung Electronics Co., Ltd., Suwon-si, Gyeonggi-Do (KR)
(72) Inventor: Park, Hyung Ryoung, Suwon-Si, Gyeonggi-Do (KR)
(74) Representative: Grünecker, Kinkeldey, Stockmair & Schwanhäusser Anwaltssozietät

(57) **Abstract**

A ventilation apparatus for achieving pleasant indoor air and a control method thereof. The ventilation apparatus can recognize quantitative CO₂ density and air state of a room by use of an inexpensive thermal sensor (30), in place of an expensive infrared CO₂ sensor, thereby realizing a highly reliable ventilation system. Also, according to the control method of the ventilation apparatus, through the use of a control algorithm capable of recognizing the presence of people and fire, it is possible to control a ventilation operation with respect to a kitchen environment, which is impossible to accomplish using a CO₂ sensor alone. For this, the ventilation apparatus, used to discharge stuffy indoor air to the outside and to introduce fresh outside air into a room for circulation and exchange of indoor air, comprises a sensing unit (30) to sense a sensor value generated from a heat source present in the room, and a control unit (60) to recognize the heat source present in the room based on the sensed sensor value and to estimate CO₂ density of the room based on a result of detection, for controlling a ventilation operation.

## Description

### CROSS-REFERENCE TO RELATED APPLICATION

This application claims the benefit of Korean Patent Application No. 2005-72032, filed on August 6, 2005 in the Korean Intellectual Property Office, the disclosure of which is incorporated herein by reference.

### BACKGROUND OF THE INVENTION

### 1. Field of the Invention

The present invention relates to a ventilation apparatus to provide pleasant indoor air, and, more particularly, to a ventilation apparatus capable of detecting CO₂ density and air state of a room by use of an inexpensive thermal sensor, in place of an expensive infrared CO₂ sensor, to control a ventilation operation based on a result of detection, and a control method of the ventilation apparatus.

### 2. Description of the Related Art

Generally, in a closed space, such as a home, office, etc., CO₂ levels gradually rise due to respiration of occupants of the closed space. This spoils indoor air, and may cause the occupants of the closed space to experience difficulty in breathing. In view of this problem, there was developed a ventilation apparatus to discharge stuffy indoor air to the outside and to introduce fresh outside air into a room for circulation and exchange of indoor air. Recently, the ventilation apparatus has been provided with an electric heat exchanger to reduce heat loss upon ventilation.

Korean Patent Publication No. 2003-0063856 discloses such a ventilation apparatus using an electric heat exchanger.

The conventional ventilation apparatus, disclosed in the above publication, comprises: an electric heat exchanger installed at a location, where an outside air supply path and an indoor air exhaust path cross each other, for heat exchange between indoor air and outside air; an air supply fan arranged on the air supply path; and an air exhaust fan arranged on the air exhaust path. As the air supply and exhaust fans rotate, the outside air is introduced into a room via the air supply path, and the indoor air is discharged to the outside via the air exhaust path, while accompanying heat exchange between the indoor air being discharged and the outside air being introduced.

In operation, the ventilation apparatus first senses CO₂ density of a room by means of a CO₂ sensor, and controls flow rates of the air supply and exhaust fans in multiple stages based on the sensed CO₂ density value, to achieve optimum flow rates of the fans in accordance with an air state of the room. In such a manner, the ventilation apparatus acts to provide a pleasant indoor environment, and simultaneously achieves an increase in system energy efficiency.

As the CO₂ sensor, for use in the ventilation apparatus to sense CO₂ density of a room, there are generally used two kinds of sensors, i.e. an infrared CO₂ sensor and a solid electrolyte CO₂ sensor.

Considering first the infrared CO₂ sensor, although it exhibits very good accuracy because of a high gas selectivity, and assures a long product life to thereby achieve an enhancement in reliability, it has a disadvantage in that it increases product costs due to a high price thereof.

On the other hand, the solid electrolyte CO₂ sensor exhibits poor accuracy because of a low gas selectivity, and suffers from a short product life because it tends to malfunction when exposed to polluted gas or silicon gas. Also, the solid electrolyte CO₂ sensor is very sensitive to variations of air current and temperature, and thus, is unreliable. However, the solid electrolyte CO₂ sensor has an advantage in that it is inexpensive.

As stated above, the highly reliable expensive infrared CO₂ sensor increases product costs, whereas the inexpensive solid electrolyte CO₂ sensor degrades the reliability of products because of a short product life and inaccurate CO₂ density sensing ability.

To solve the above problem, Korean Patent Publication No. 1991-0017136 discloses a ventilation apparatus, which is designed to detect the number of people present in a room by use of a human sensor, in place of the CO₂ sensor, to control flow rates of air supply and exhaust fans based on the detected results, thereby being capable of carrying out a ventilation operation with an optimum flow rate.

In the above disclosed ventilation apparatus, if the human sensor detects the presence of people, a ventilation operation is carried out with a standard flow rate, which is preset based on a standard number of people in accordance with the size of a room, or is carried out with an optimum flow rate, which is calculated in consideration of the detected number of people present in a room.

The above conventional ventilation apparatus, however, is merely adapted to adjust a ventilation flow rate by detecting the presence of people or the number of people. Even if CO₂ density of a room gradually rises due to respiration of occupants of the closed room, and thus, indoor air is spoiled, the conventional ventilation apparatus has no function of detecting an air state of the room. For this reason, the disclosed conventional ventilation apparatus has a limitation of providing pleasant indoor air.

Moreover, when the ventilation flow rate is adjusted based on only the detected number of people, there is a risk that the ventilation apparatus carries out an unnecessary ventilation operation even in a pleasant indoor environment, resulting in unnecessary energy consumption.

Meanwhile, when flow rates of fans are controlled based on only CO₂ density, there is no method of ventilating stuffy indoor air, containing food smell and gas smell, which is caused upon cooking by fire in a general domestic kitchen.

### SUMMARY OF THE INVENTION

Therefore, the present invention has been made in order to solve the above problems, and it is an aspect of the invention to provide a ventilation apparatus capable of detecting quantitative CO₂ density and air state of a room by use of an inexpensive thermal sensor, in place of an expensive infrared CO₂ sensor, thereby realizing a highly .reliable ventilation system.

It is another aspect of the invention to provide a ventilation apparatus capable of accurately detecting CO₂ density and air state over the entire region of a room by use of a step motor that is used to horizontally move a thermal sensor.

It is a further aspect of the invention to provide a control method of a ventilation apparatus using a control algorithm that detects the presence of people or fire, which is capable of controlling a ventilation operation with respect to a kitchen environment, which is insufficient by a CO₂ sensor.

It is yet another aspect of the invention to provide a control method of a ventilation apparatus, which automatically determines the implementation of a ventilation operation in accordance with CO₂ density and air state of a room, and controls flow rates of fans optimally, thereby enabling maintenance of pleasant indoor air without waste of energy.

In accordance with one aspect, the present invention provides a ventilation apparatus to discharge stuffy indoor air to the outside and to introduce fresh outside air into a room for circulation and exchange of indoor air, comprising: a sensing unit to sense a sensor value generated from a heat source present in the room; and a control unit to detect the presence of the heat source present in the room based on the sensed sensor value and to estimate CO₂ density of the room based on a result of detection, for controlling a ventilation operation.

The sensing unit may be a thermal sensor to sense heat generated from the heat source present in the room, and the heat source may be people or fire.

The ventilation apparatus may further comprise: a motor to move the thermal sensor in accordance with control of the control unit, to allow the thermal sensor to sense the heat source over the entire region of the room.

The ventilation apparatus may further comprise: a temperature sensor to sense a surrounding temperature of the room, and, based on the sensed surrounding temperature, the control unit may determine a predetermined temperature difference with the surrounding temperature and a certain temperature range, which enables discrimination of the heat source.

The control unit may estimate CO₂ density of the room based on the number of people present in the room and a residence time of people, to adjust the introduction amount of outside air and the discharge amount of indoor air in accordance with the estimated CO₂ density if the estimated CO₂ density is out of a predetermined standard value range.

The ventilation apparatus may further comprise: an input unit to input the size of the room, and based on the inputted room size, the control unit may determine a standard value to adjust the introduction amount of outside air and the discharge amount of indoor air.

The ventilation apparatus may further comprise: an input unit to input the position of a kitchen, and based on the inputted kitchen position, the control unit may determine a predetermined temperature difference with the surrounding temperature and a certain temperature range, which show the presence of fire.

In accordance with control of the control unit, a fire alarm may be sounded if fire is sensed at a place except for the inputted kitchen position for more than a predetermined time.

In accordance with another aspect, the present invention provides a method of controlling a ventilation apparatus, which serves to discharge stuffy indoor air to the outside and to introduce fresh outside air into a room for circulation and exchange of indoor air, the method comprising: sensing a sensor value generated from a heat source present in a room; and controlling a ventilation operation by detecting the heat source present in the room based on the sensed sensor value and estimating CO₂ density of the room based on a result of detection.

The sensing of the sensor value may comprise: sensing heat generated from the heat source, such as people or fire, present in the room by use of a thermal sensor; and moving the thermal sensor to sense the heat source over the entire region of the room.

The control method may further comprise: sensing a surrounding temperature of the room, and based on the sensed surrounding temperature, a predetermined temperature difference with the surrounding temperature and a certain temperature range, which enables discrimination of the heat source, may be determined.

The controlling of the a ventilation operation may comprise: estimating CO₂ density of a room based on the number of people present in the room and a residence time of people, to adjust the introduction amount of outside air and the discharge amount of indoor air in accordance with the estimated CO₂ density if the estimated CO₂ density is out of a predetermined standard value range.

The control method may further comprise: manually inputting the size of the room, and based on the inputted room size, a standard value may be determined to adjust the introduction amount of outside air and the discharge amount of indoor air.

The control method may further comprise: manually inputting the position of a kitchen, and based on the inputted kitchen position, a predetermined temperature difference with a surrounding temperature and a certain temperature range, which enables discrimination of fire, may be determined.

A fire alarm may be sounded if fire is sensed at a place except for the inputted kitchen position for more than a predetermined time.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings, of which:
FIG. 1 is a configuration diagram schematically showing a ventilation apparatus according to the present invention;
FIG. 2 is a graph schematically showing a method for sensing a heat source present in a room by use of a thermal sensor according to the present invention;
FIG. 3 is a control block diagram of the ventilation apparatus according to an embodiment of the present invention; and
FIGS. 4A and 4B are flow charts showing operational sequence of a control method of the ventilation apparatus according to the present invention.

### DETAILED DESCRIPTION OF THE PREFERRED EMBODIMENTS

Reference will now be made in detail to the embodiment of the present invention, examples of which are illustrated in the accompanying drawings, wherein like reference numerals refer to like elements throughout. The embodiment is described below to explain the present invention by referring to the figures.

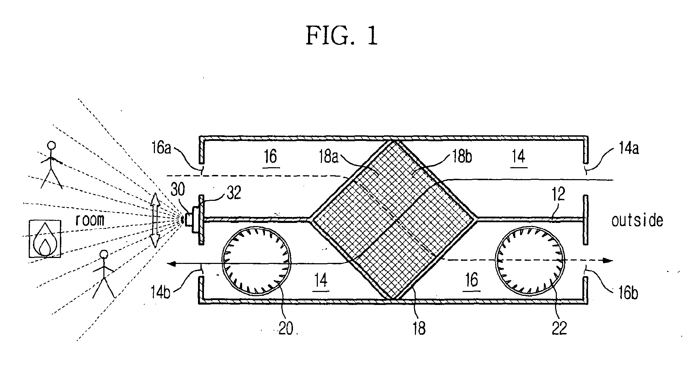

FIG. 1 is a configuration diagram schematically showing a ventilation apparatus according to the present invention.

In FIG. 1, the ventilation apparatus according to the present invention includes a body 10 having a rectangular box shape, a partition 12 arranged to divide an interior space of the body 10 into upper and lower sections, an air supply duct 14 defined in the body 10 to introduce outside air into a room, and an air exhaust duct 16 defined in the body 10 to intersect with the air supply duct 14 at a certain location thereof, to discharge indoor air to the outside.

An electric heat exchanger 18 is installed at the intersection of the air supply duct 14 and the air exhaust duct 16, so that air, which passes through the air supply duct 14, is able to exchange heat with air, which passes through the air exhaust duct 15, without being mixed with each other. Both the air supply duct 14 and the air exhaust duct 16 cross the interior space of the body 10 from the upper section to the lower section or from the lower section to the upper section about the electric heat exchanger 18, so as not to interfere with each other.

The air supply duct 14 is provided at one end thereof with an air supply inlet 14a to communicate with the outside, and at the other end thereof with an air supply outlet 14b to communicate with a room. The air exhaust duct 16 is provided at one end thereof with an air exhaust inlet 16a to communicate with the room, and at the other end thereof with an air exhaust outlet 16b to communicate with the outside.

An air supply fan 20 is installed on the inside of the air supply outlet 14b of the air supply duct 14, to forcibly suction outside air. Also, an air exhaust fan 22 is installed on the inside of the air exhaust outlet 16b of the air exhaust duct 16, to forcibly discharge indoor air. In accordance with operations of the air supply fan 20 and the air exhaust fan 22, outside air and indoor air flow along the air supply duct 14 and the air exhaust duct 16, respectively, to achieve a ventilation operation.

Meanwhile, the electric heat exchanger 18 has a cubic shape, and is obliquely mounted in the body 10 so that upper and lower corners thereof are supported by the top and bottom of the body 10 and left and right corners thereof are supported by the partition 12. Here, the partition 12 is located to separate the air supply duct 14 from the air exhaust duct 16. Such an electric heat exchanger 18 is provided therein with a plurality of air supply passages 18a to communicate with the air supply duct 14, and a plurality of air exhaust passages 18b to communicate with the air exhaust duct 16.

In FIG. 1, the air supply passages 18a are designated by solid lines, and the air exhaust passages 18b are designated by dotted lines.

A thermal sensor 30 is installed at an outer side of the body 10 facing a room, to sense heat of the room. To the thermal sensor 30 is coupled a step motor 32. The step motor 32 horizontally moves the thermal sensor 30, so that the thermal sensor 30 is able to scan the entire region of a room.

The thermal sensor 30 can sense the presence of people and fire. If heat, higher than a surrounding temperature of a room, is detected, the thermal sensor 30 senses the presence of people or fire based on a temperature difference with the surrounding temperature and a temperature range. When people or fire are present in a closed room for a predetermined time, the thermal sensor 30 estimates air state of a room in an indirect manner, to enable an optimum ventilation operation to be carried out based on a result of estimation.

The step motor 32 drives the thermal sensor 30 horizontally, so that the thermal sensor 30 can be moved minutely for a sensing time period to scan the entire region of a room.

Although not shown, in the same manner as a conventional ventilation apparatus, a plurality of dampers are installed at the air supply inlet 14a, the air exhaust inlet 16a, and other locations of the air supply and exhaust ducts 14 and 16, to intercept an air flow or change a flowing direction of air.

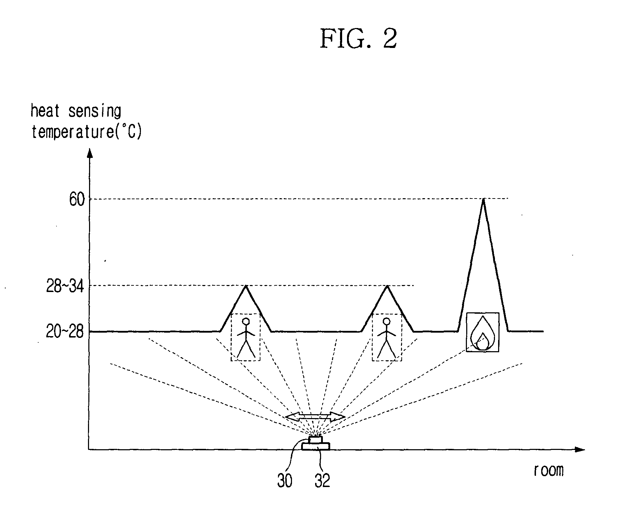

FIG. 2 is a graph schematically showing a method for sensing a heat source present in a room by use of a thermal sensor according to the present invention.

In FIG. 2, if the thermal sensor 30 is moved horizontally in accordance with the driving of the step motor 32, and detects heat (for example, 28 to 34 degrees centigrade or more than 34 degrees centigrade) higher than a surrounding temperature of a room (for example, 10 to 28 degrees centigrade), the presence of people or fire is sensed based on a temperature difference with the surrounding temperature and a temperature range.

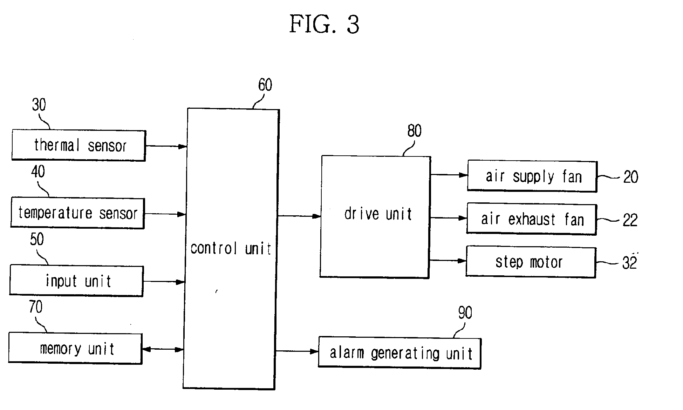

FIG. 3 is a control block diagram of the ventilation apparatus according to an embodiment of the present invention. A control system of the ventilation apparatus according to the present invention includes the thermal sensor 30, a temperature sensor 40, an input unit 50, a control unit 60, a memory unit 70, a drive unit 80, and an alarm generating unit 90.

The thermal sensor 30 is a thermopile sensor used to sense heat for detecting a heat source present in a room. The thermal sensor 30 is installed at a certain location of a room.

The temperature sensor 40 is used to sense an air temperature for sensing a surrounding temperature of a room. The installation position of the temperature sensor 40 is freely selectable so long as the temperature sensor 40 is able to sense the temperature of indoor air.

The input unit 50 includes a plurality of keys arranged on a control panel or remote controller, to allow a user to input desired operation information (for example, operating time, operating flow rate, beginning/stopping of operation, etc.) into the control unit 60. In addition, the input unit 50 includes a key to operate the thermal sensor 30 in an automated manner, and a key to input the size of a room or the position of the step motor 32 with respect to a kitchen at an initial installation time point of the ventilation apparatus.

The control unit 60 is a microcomputer to control respective elements of the ventilation apparatus. The control unit 60 calculates a difference value with a surrounding temperature of a room from a preset temperature range based on the value sensed by the thermal sensor 30, to sense the presence of people and fire in a room. Also, the control unit 60 estimates stuffy CO₂ density and air state of a room under the assumption that people or fire are present in a closed room for a predetermined time, based on the value sensed by the thermal sensor 30, so that flow rates and operating times of the air supply fan 20 and the air exhaust fan 22 can be controlled to achieve an optimum ventilation operation based on a result of estimation. The control unit 60 stores a present temperature range, which corresponds to the value sensed by the thermal sensor 30, in a ROM table of an inner memory.

In addition, the control unit 60 calculates a movement distance of the step motor 32, which moves minutely during a heat sensing operation of the thermal sensor 30. Calculation of the movement distance of the step motor enables the discrimination of overlapped people in the sensed region. To accurately calculate the number of people, the control unit 60 determines whether the number of people sensed upon leftward movement of the step motor 32 is the same as the number of people sensed upon rightward movement of the step motor 32. If the numbers of people sensed upon leftward and rightward movements are the same, the control unit 60 determines how many people are present in the room.

To minimize a sensing error, if it is sensed for a predetermined time that a temperature difference with a surrounding temperature of a room at a fixed location and a temperature range are different from a temperature range of people, the control unit 60 determines that the sensed heat source is not people, and stores a compensation value in the memory unit 70, to enable control compensation using the thermal sensor 30.

As an optional function, when the presence of fire is sensed at two or more locations in a room for more than a predetermined time, the control unit 60 controls the alarm generating unit 90 to sound a fire alarm.

The memory unit 70 is an EEPROM containing a surrounding temperature of a room, a temperature range that shows a temperature difference with the surrounding temperature, a manually inputted position of the step motor 32 with respect to a kitchen, the size of a room, etc. The memory unit 70 may be provided at the inside or outside of the control unit 60 as occasion demands.

The drive unit 80 serves to control operations of the air supply fan 20, the air exhaust fan 22, and the step motor 32 in accordance with control signals of the control unit 60. Specifically, the drive unit 80 controls flow rates and operating times of the air supply and exhaust fans 20 and 22 in accordance with CO₂ density and air state of a room.

The alarm generating unit 90 serves to sound a fire alarm in accordance with control signals of the control unit 60.

Hereinafter, the ventilation apparatus having the above configuration and the operational sequence and effects of a control method thereof are described.

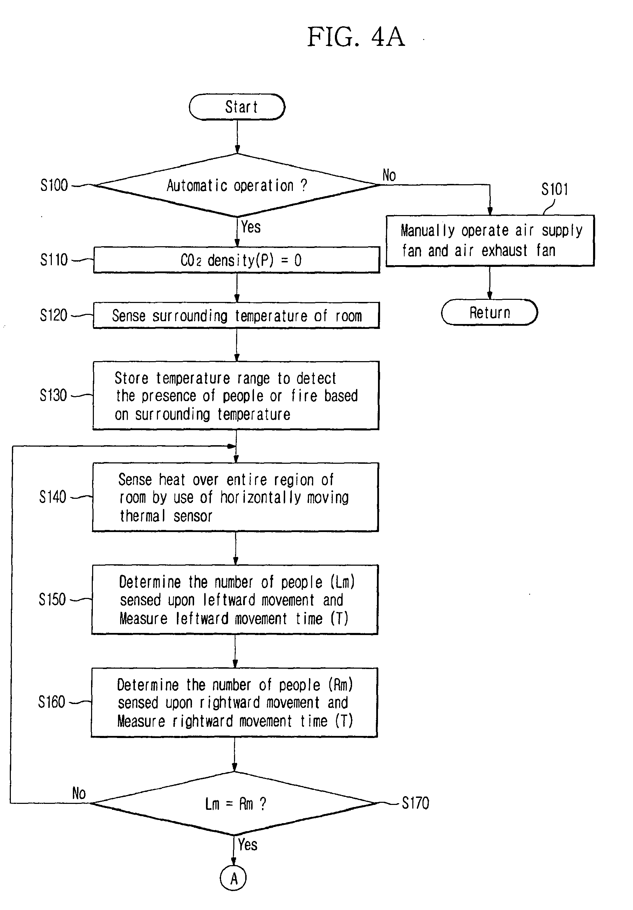

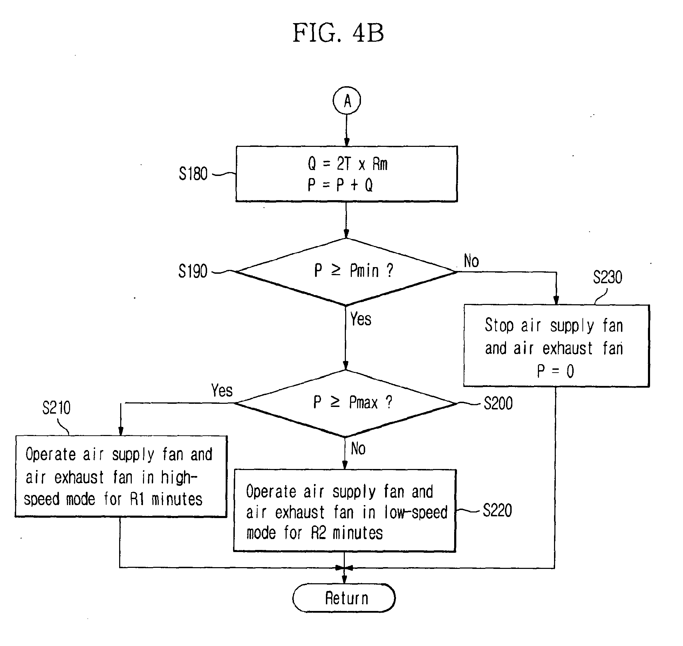

FIGS. 4A and 4B are flow charts showing operational sequence of a control method of the ventilation apparatus according to the present invention.

First, desired information (for example, operating time, operating flow rate, position of a step motor with respect to a kitchen, size of a room, etc.) is manually inputted into the control unit 60 via the input unit 50. Then, the control unit 60 determines whether a ventilation operation will be automatically or manually carried out, prior to beginning the ventilation operation (S100). If a manual ventilation operation is determined, the air supply and exhaust fans 20 and 22 are manually operated (S101).

Conversely, if an automatic ventilation operation is determined, CO₂ density value (P), which is used to quantitatively estimate stuffy CO₂ density, is cleared (S110). After that, a temperature of indoor air is sensed by the temperature sensor 40 to detect a surrounding temperature of a room, and is inputted to the control unit 60 (S120).

Thereby, based on the inputted surrounding temperature of a room, the control unit 60 determines a predetermined temperature difference with the surrounding temperature and a temperature range, which shows the presence of people, and stores them into the memory unit 70 (S130).

The temperature difference with the surrounding temperature and the temperature range are used to sense the presence of people and fire when the thermal sensor 30 senses heat higher than the surrounding temperature of a room.

After that, if the thermal sensor 30 is operated to sense a heat source present in the room, the step motor 32 is driven in accordance with control of the control unit 60 to move the thermal sensor 30 leftward or rightward, so that the thermal sensor 30 can sense the presence of the heat source over the entire region of a room (S140).

If a heat source, which shows a temperature difference with the surrounding temperature, is sensed upon leftward movement of the thermal sensor 30, the control unit 60 receives a value sensed upon the leftward movement of the thermal sensor 30, and compares the value with the temperature range stored in the memory unit 70, to determine whether the heat source is people or fire. If the heat source is people, the control unit 60 determines the number of people (Lm) sensed for a leftward movement time while measuring the leftward movement time (T) (S150).

After the leftward movement of the thermal sensor 30 is completed, the step motor 32 is driven to move the thermal sensor 30 rightward. In the same manner as the leftward movement, if a heat source, which shows a temperature difference with the surrounding temperature, is sensed upon rightward movement of the thermal sensor 30 is moved rightward, the control unit 60 receives a value sensed upon the rightward movement of the thermal sensor 30, and compares the value with the temperature range stored in the memory unit 70, to determine whether the heat source is people or fire. If the heat source is people, the control unit 60 determines the number of people (Rm) sensed for a rightward movement time while measuring the rightward movement time (T) (S160).

In this case, the leftward and rightward movement times (T) of the thermal sensor 30 are identical, and the sum (2T) of the leftward and right movement times is one cycle required for the thermal sensor 30 to horizontally scan the entire region of a room.

The control unit 60 calculates leftward and rightward movement distances of the step motor 32, which minutely moves, to enable discrimination of overlapped people in a sensed region.

Also, to determine the exact number of people, the control unit 60 determines whether the number of people sensed upon leftward movement of the step motor 32 is the same as the number of people sensed upon rightward movement (S170). If the numbers of people sensed upon leftward and rightward movements are identical, the control unit 60 determines the exact number of people.

On the other hand, when the heat source is fire, a position of the step motor 32 with respect to a kitchen is manually inputted to the control unit 60 and is stored in the memory unit 70. After that, in the same manner as stated above, the control unit 60 determines a temperature difference with the surrounding temperature and a corresponding temperature range, to sense the presence of fire.

Meanwhile, when the exact number of people is determined, and the people are present in a closed room for a predetermined time, the control unit 60 calculates a presumptive density value (Q) based on the following Equation 1, to quantitatively estimate CO₂ density caused by respiration of the people.

Presumptive density value (Q) = 2T x Rm, ......... Equation 1 (where, 2T is a time required to carry out one cycle, and Rm is the number of people)

The presumptive density valve (Q), calculated by the above Equation 1, is added to a CO₂ density value (P), which was initially cleared, to estimate a quantitative CO₂ density value (P) of a room (S180).

Thereby, the control unit 60 compares the estimated CO₂ density value (P) with a minimum standard value (Pmin) stored in the memory unit 70, to determine whether the estimated CO₂ density value (P) is higher than the minimum standard value (Pmin) (S190). Here, the minimum standard value (Pmin) is a minimum CO₂ density value that initially requires a ventilation operation.

If the estimated CO₂ density value (P) is higher than the minimum standard value (Pmin), the control unit 60 again compares the estimated CO₂ density value (P) with a maximum standard value (Pmax) stored in the memory unit 70, to determine whether the estimated CO₂ density value (P) is higher than the maximum standard value (Pmax) (S200). Here, the maximum standard value (Pmax) is a maximum CO₂ density value that positively requires a ventilation operation.

Both the minimum standard value (Pmin) and the maximum standard value (Pmax) are preset values stored in the memory unit 70.

To achieve a more accurate CO₂ density value, the size of a room is manually inputted to the control unit 60 when the ventilation apparatus is initially installed in a room, so that the control unit 60 determines maximum and minimum standard values corresponding to maximum and minimum CO₂ densities, respectively, which identify stuffy indoor air. The determined maximum and minimum standard values are stored in the memory unit 70.

As a result of comparison, if the CO₂ density value (P) is larger than the maximum standard value (Pmax), the control unit 60 controls the air supply and exhaust fans 20 and 22 to operate at high speed for a predetermined time (R1) (for example, 80 minutes), for prompt ventilation of a room (S210).

Conversely, if the CO₂ density value (P) is smaller than the maximum standard value (Pmax), the control unit 60 controls the air supply and exhaust fans 20 and 22 to operate at low speed for a predetermined time (R2) for ventilation of a room (S220). Here, the time (R2) is shorter than the time (R1), and, for example, is 50 minutes.

In this way, according to the present invention, the supply amount of outside air and the exhaust amount of indoor air are differently adjusted in accordance with CO₂ density of a room, i.e. polluted degree of stuffy indoor air. Simultaneously, a ventilation time is differently adjusted, enabling control of an optimum ventilation operation.

Also, with a result of comparison at the operation (S190), if the CO₂ density value (P) is smaller than the minimum standard value (Pmin), it is determined that a ventilation operation is no longer necessary. Accordingly, the control unit 60 interrupts the supply of electric power to the air supply and exhaust fans 20 and 22, to stop operation of the ventilation apparatus. Also, in a state wherein no electric power is applied to the air supply and exhaust fans 20 and 22 and thus, the air supply and exhaust fans 20 and 22 are not operated, the control unit 60 continuously maintains such an operation stop state, and clears the CO₂ density value (P) (S230).

When the fire is sensed for a predetermined time in the same manner as that described above, the ventilation apparatus of the present embodiment can operate based on the maximum standard value and the minimum standard value in accordance with the size of a room. In this way, the ventilation apparatus can recognize the presence of both people and fire, and thus, can recognize the situation of a kitchen, which is impossible to accomplish using a CO₂ sensor alone. Accordingly, the ventilation apparatus of the present invention can optimally control a ventilation operation in accordance with the air state of a room.

As an optional function, when the presence of fire is sensed at two or more locations in a room for more than a predetermined time, a fire alarm is sounded via the alarm generating unit 90, so that a user can be prepared for a fire accident.

As apparent from the above description, according to the ventilation apparatus of the present invention, it is possible to estimate quantitative CO₂ density and air state of a room by use of an inexpensive thermal sensor, in place of an expensive infrared CO₂ sensor. Thus, the present invention can realize a highly reliable satisfactory ventilation system. Also, through the use of a step motor that can move the thermal sensor leftward and rightward, the present invention enables an accurate detection of CO₂ density and air state over the entire region of a room.

Further, according to a method of controlling the ventilation apparatus, through the use of a control algorithm capable of recognizing the presence of people and fire, it is possible to control a ventilation operation with respect to a kitchen environment, which is impossible to accomplish using a CO₂ sensor alone. Also, according to the control method of the present invention, the implementation of a ventilation operation can be automatically determined and flow rates of fans can be optimally controlled in accordance with CO₂ density and air state of a room. As a result, pleasant indoor air can be maintained without waste of energy.

Furthermore, the ventilation apparatus of the present invention has a function of sensing the generation of fire in a room, thereby being capable of sounding a fire alarm.

Although an embodiment of a ventilation apparatus and a control method thereof according to the present invention has been shown and described, it would be appreciated by those skilled in the art that changes may be made in this embodiment without departing from the principles and spirit of the invention, the scope of which is defined in the claims and their equivalents.

## Claims

1. A ventilation apparatus to discharge stuffy indoor air to the outside and to introduce fresh outside air into a room for circulation and exchange of indoor air, comprising:
a sensing unit to sense a sensor value generated from a heat source present in the room; and
a control unit to detect the presence of the heat source present in the room based on the sensed sensor value and to estimate CO₂ density of the room based on a result of detection, for controlling a ventilation operation.

2. The apparatus according to claim 1, wherein the sensing unit is a thermal sensor to sense heat generated from the heat source present in the room.

3. The apparatus according to claim 2, wherein the heat source is people or fire.

4. The apparatus according to claim 2, further comprising:
a motor to move the thermal sensor in accordance with control of the control unit, to allow the thermal sensor to sense the heat source over the entire region of the room.

5. The apparatus according to claim 1, further comprising:
a temperature sensor to sense a surrounding temperature of the room,
wherein, based on the sensed surrounding temperature, the control unit determines a predetermined temperature difference with the surrounding temperature and a certain temperature range, which enables discrimination of the heat source.

6. The apparatus according to claim 5, wherein the control unit estimates CO₂ density of the room based on the number of people present in the room and a residence time of people, to adjust the introduction amount of outside air and the discharge amount of indoor air in accordance with the estimated CO₂ density if the estimated CO₂ density is out of a predetermined standard value range.

7. The apparatus according to claim 6, further comprising:
an input unit to input the size of the room,
wherein, based on the inputted room size, the control unit determines a standard value to adjust the introduction amount of outside air and the discharge amount of indoor air.

8. The apparatus according to claim 1, further comprising:
an input unit to input the position of a kitchen,
wherein, based on the inputted kitchen position, the control unit determines a predetermined temperature difference with the surrounding temperature and a certain temperature range, which show the presence of fire.

9. The apparatus according to claim 8, wherein, in accordance with control of the control unit, a fire alarm is sounded if fire is sensed at a place except for the inputted kitchen position for more than a predetermined time.

10. A method of controlling a ventilation apparatus, which serves to discharge stuffy indoor air to the outside and to introduce fresh outside air into a room for circulation and exchange of indoor air, the method comprising:
sensing a sensor value generated from a heat source present in a room; and
controlling a ventilation operation by detecting the heat source present in the room based on the sensed sensor value and estimating CO₂ density of the room based on a result of detection.

11. The method according to claim 10, wherein the sensing of the sensor value comprises:
sensing heat generated from the heat source, such as people or fire, present in the room by use of a thermal sensor; and
moving the thermal sensor to sense the heat source over the entire region of the room.

12. The method according to claim 10, further comprising:
sensing a surrounding temperature of the room,
wherein, based on the sensed surrounding temperature, a predetermined temperature difference with the surrounding temperature and a certain temperature range, which enables discrimination of the heat source, are determined.

13. The method according to claim 12, wherein the controlling of the a ventilation operation comprises:
estimating CO₂ density of a room based on the number of people present in the room and a residence time of people, to adjust the introduction amount of outside air and the discharge amount of indoor air in accordance with the estimated CO₂ density if the estimated CO₂ density is out of a predetermined standard value range.

14. The method according to claim 13, further comprising:
manually inputting the size of the room,
wherein, based on the inputted room size, a standard value is determined to adjust the introduction amount of outside air and the discharge amount of indoor air.

15. The method according to claim 10, further comprising:
manually inputting the position of a kitchen,
wherein, based on the inputted kitchen position, a predetermined temperature difference with a surrounding temperature and a certain temperature range, which enables discrimination of fire, are determined.

16. The method according to claim 15, wherein a fire alarm is sounded if fire is sensed at a place except for the inputted kitchen position for more than a predetermined time.
